# EUROPEAN PATENT APPLICATION

(11) **EP 3 916 583 A1**
(43) Date of publication of application: **01.12.2021**
(21) Application number: 19922148.2
(22) Date of filing: 26.03.2019
(51) Int. Cl.: G06F 16/909, G06F 16/29

(54) **INFORMATION PROCESSING DEVICE, INFORMATION PROCESSING METHOD, AND PROGRAM**

(71) Applicant: Japan Tobacco Inc., Tokyo 105-6927 (JP)
(72) Inventor: SERITA, Kazutoshi, Tokyo 130-8603 (JP); SENJU, Masatoshi, Tokyo 130-8603 (JP); ITABASHI, Masato, Tokyo 130-8603 (JP)
(74) Representative: Hoffmann Eitle
(86) International application number: PCT/JP2019/012914
(87) International publication number: WO 2020/194520

(57) **Abstract**

The present invention makes it possible to accurately and effortlessly acquire information regarding a smoking area desired by a user. An information processing device is provided with: a storage unit 33 in which location information for one or more smoking areas and one or more use conditions for the smoking areas are associated and stored; a reception unit for receiving search requests for a smoking area that include location information for a user terminal 2; an identification unit for identifying at least one of the time at which a search request was received, the environmental conditions at the current location of the user terminal 2, and the use state of a flavor inhaler 1 when a search request is received from the user terminal 2; a search unit for searching for a smoking area that is within a predetermined range from the current location and that meets a use condition on the basis of the location information for smoking areas and at least one of the specified time, environmental conditions, and/or use state; and a reporting unit 316 that reports location information for a retrieved smoking area to the user terminal 2.

## Description

### Technical Field

The present invention relates to an information processing device, an information processing method, and a program.

### Background Art

In these years, techniques for providing information regarding smoking places are being developed.

With respect to this, in PTL 1, a technique is disclosed in which a server searches for smoking-permitted places located within a certain range from a current location of a user on the basis of a fact that a user terminal device has accessed the server and provides information indicating the smoking-permitted places for the user terminal device. In PTL 2, a technique is disclosed in which a user is asked to input certain conditions for identifying smoking places and smoking places that meet the conditions are presented to the user.

### Citation List

### Patent Literature

PTL 1: Japanese Patent Application Publication No. 2008-59382
PTL 2: International Publication No. 2017/055800

### Summary of Invention

### Technical Problem

As described above, with the conventional technique described in PTL 1, smoking places located within a certain range from a current location of a user can be presented to a user terminal device. When information regarding smoking places is presented to the user just because the smoking places are located close to the current location of the user, however, information regarding smoking places that the user does not actually desire might be provided. With the conventional technique described in PTL 2, a user needs to input certain conditions for identifying smoking places by operating a user terminal device, which is troublesome for the user.

Some aspects of the present invention have been conceived in view of such circumstances, and aim to provide an information processing technique that enables a user to accurately and effortlessly acquire information regarding smoking areas desired by the user.

### Solution to Problem

An information processing device according to an aspect of the present invention includes a storage unit that stores location information regarding at least one smoking area and at least one use condition for the smoking area while associating the location information and the use condition to each other, a reception unit that receives a search request for a smoking area including location information regarding a user terminal, an identification unit that, in a case where the search request is received from the user terminal, identifies at least a time at which the search request has been received, an environmental condition at a current location of the user terminal, or a use mode of a flavor inhaler, a search unit that searches for a smoking area that is located within a certain range from the current location and that meets the use condition on a basis of the location information regarding the smoking area and at least the identified time, the identified environmental condition, or the identified use mode, and a reporting unit that reports location information regarding the retrieved smoking area to the user terminal.

An information processing method according to another aspect of the present invention is an information processing method executed by a computer. The information processing method comprising the steps of storing location information regarding at least one smoking area and at least one use condition for the smoking area while associating the location information and the use condition to each other, receiving a search request for a smoking area including location information regarding a user terminal, identifying, in a case where the search request is received from the user terminal, at least a time at which the search request has been received, an environmental condition at a current location of the user terminal, or a use mode of a flavor inhaler, searching for a smoking area that is located within a certain range from the current location and that meets the use condition on a basis of the location information regarding the smoking area and at least the identified time, the identified environmental condition, or the identified use mode, and reporting location information regarding the retrieved smoking area to the user terminal.

A program according to another aspect of the present invention causes a computer to achieve a storage unit that stores location information regarding at least one smoking area and at least one use condition for the smoking area while associating the location information and the use condition to each other, a reception unit that receives a search request for a smoking area including location information regarding a user terminal, an identification unit that, in a case where the search request is received from the user terminal, identifies at least a time at which the search request has been received, an environmental condition at a current location of the user terminal, or a use mode of a flavor inhaler, a search unit that searches for a smoking area that is located within a certain range from the current location and that meets the use condition on a basis of the location information regarding the smoking area and at least the identified time, the identified environmental condition, or the identified use mode, and a reporting unit that reports location information regarding the retrieved smoking area to the user terminal.

According to these aspects, smoking areas that are located within a certain range from a current location of a user terminal and that meet use conditions are searched for on the basis of location information regarding smoking areas and at least an identified time at which a search request has been received, identified environmental conditions at the current location of the user terminal, or an identified use mode of a flavor inhaler, and location information regarding the retrieved smoking areas are reported to the user terminal. Smoking areas desired by the user, therefore, can be accurately searched for, and the user need not input certain conditions for identifying smoking areas. Information regarding smoking areas desired by the user, therefore, can be accurately and effortlessly acquired.

In the present invention, "unit" and "device" do not just refer to physical means but also refer to a case where functions of "unit" and "device"" are achieved by software. A function of a single "unit" or "device" may be achieved by two or more physical means or devices, or functions of two or more "units" or "devices" may be achieved by single physical means or device.

### Advantageous Effects of Invention

According to the present invention, information regarding smoking areas desired by the user can be accurately and effortlessly acquired.

### Brief Description of Drawings

[Fig. 1] Fig. 1 is a schematic configuration diagram of a smoking area location reporting system according to an embodiment of the present invention.
[Fig. 2A] Fig. 2A is a block diagram of a schematic configuration of a flavor inhaler according to the embodiment of the present invention.
[Fig. 2B] Fig. 2B is a diagram illustrating an example of a schematic appearance of the flavor inhaler according to the embodiment of the present invention.
[Fig. 3] Fig. 3 is a block diagram illustrating a schematic configuration of the flavor inhaler according to the embodiment of the present invention.
[Fig. 4] Fig. 4 is a block diagram illustrating another schematic configuration of the flavor inhaler according to the embodiment of the present invention.
[Fig. 5] Fig. 5 is a diagram illustrating another example of the schematic appearance of the flavor inhaler according to the embodiment of the present invention.
[Fig. 6] Fig. 6 is a diagram illustrating another example of the schematic appearance of the flavor inhaler at a time when the flavor inhaler holds an aerosol-source material according to the embodiment of the present invention.
[Fig. 7] Fig. 7 is a block diagram of a schematic configuration of a user terminal according to the embodiment of the present invention.
[Fig. 8] Fig. 8 is a schematic configuration diagram illustrating an example of the functional configuration of an information processing server according to the embodiment of the present invention.
[Fig. 9] Fig. 9 is a diagram illustrating an example of log information according to the embodiment of the present invention.
[Fig. 10] Fig. 10 is a diagram illustrating an example of use condition information according to the embodiment of the present invention.
[Fig. 11] Fig. 11 is a flowchart illustrating an example of a process for reporting locations of smoking areas according to the embodiment of the present invention.
[Fig. 12] Fig. 12 is a diagram illustrating an example of a screen output on the user terminal according to the embodiment of the present invention.
[Fig. 13] Fig. 13 is a diagram illustrating an example of the hardware configuration of computer according to the embodiment of the present invention.

### Description of Embodiments

Embodiments of the present invention will be described hereinafter with reference to the accompanying drawings. The following embodiments are examples for describing the present invention and not intended to limit the present invention thereto. In addition, the present invention can be modified in various ways insofar as the scope thereof is not deviated from. Furthermore, the same components are given the same reference numerals in the drawings as much as possible, and redundant description thereof is omitted.

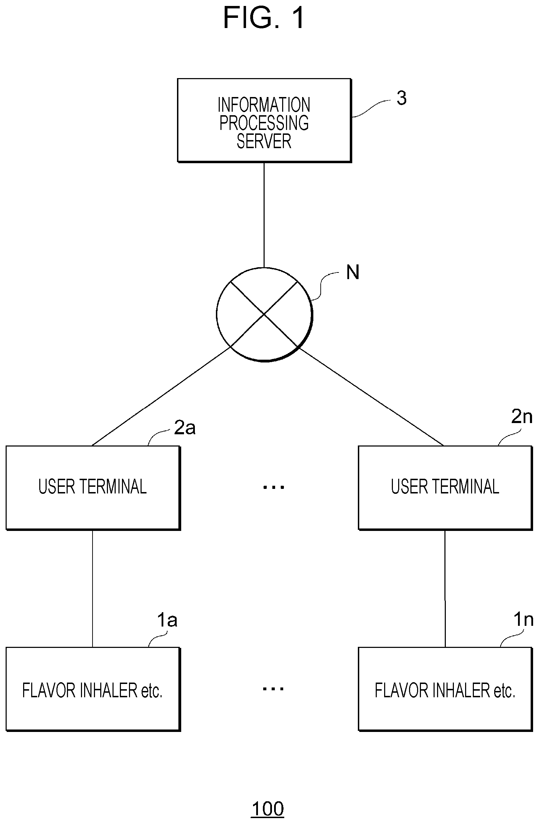

Fig. 1 is a schematic configuration diagram (system configuration diagram) of a smoking area location reporting system that reports locations of smoking areas according to a present embodiment of the present invention. As illustrated in Fig. 1, a smoking area location reporting system 100 is configured to include, for example, n (n is an integer larger than or equal to 1) flavor inhalers 1, n (n is an integer larger than or equal to 1) user terminals 2, and an information processing server 3 (information processing device) configured to be able to communicate with the user terminals 2 over a network N.

An "flavor inhaler 1" refers to an apparatus for inhaling a flavor and implies, but is not limited to, for example, an electronic cigarette, a heat-not-burn tobacco cigarette, or a conventional cigarette. The flavor inhaler 1 includes an aerosol generation device for inhaling a generated aerosol. The aerosol generation device implies, for example, an electronic cigarette, a heat-not-burn tobacco cigarette, or a medical nebulizer. More specifically, the aerosol generation device is, for example, a device that generates an aerosol by atomizing a liquid (aerosol source) using electric power. The aerosol is obtained by atomizing the aerosol source and is particles fine enough to float in a gas. The aerosol generated by the aerosol generation device may have a flavor. Examples of the aerosol generation device include heat-not-burn tobacco cigarettes (T-vapor and Infused) and electronic cigarettes (E-vapor). The aerosol generation device may be of a type that directly heats tobacco (direct heating), a type that indirectly heats tobacco (indirect heating), or a type that heats a liquid. Alternatively, the aerosol generation device may atomize a liquid by generating SAWs (surface acoustic waves) using a piezoelectric substrate including a pair of comb electrodes. Fig. 1 illustrates a flavor inhaler 1a and a flavor inhaler In as the n flavor inhalers. When these n flavor inhalers are not distinguished from one another in the following description, however, the n flavor inhalers will be simply referred to as "flavor inhalers 1" while omitting part of reference numerals.

"Smoking areas" refer to areas where users can smoke. Smoking areas include, for example, area where the users can smoke using the flavor inhalers 1. The smoking areas may be outdoors or indoors. Indoor smoking areas may include, for example, spaces that are defined by rooms, certain partitions, or the like and where air conditioning apparatuses, ventilation apparatuses, or the like are installed.

The smoking area location reporting system 100 is a so-called client server system. The smoking area location reporting system 100 is achieved when the n user terminals 2, which are clients, and the information processing server 3 communicate with each other the network N. The network N is achieved, for example, by a network such as the Internet or a mobile telephone network or a LAN (Local Area Network), or a network obtained by combining these together.

The information processing server 3 is achieved, for example, by one or a plurality of (at least one) server apparatuses. The user terminals 2 are achieved, for example, by smartphones, gaming machines, or personal computers. Fig. 1 illustrates a user terminal 2a and a user terminal 2n as the n user terminals 2. When these n user terminals 2 are not distinguished from one another in the following description, however, the n user terminals 2 will be simply referred to as "user terminals 2" while omitting part of reference numerals.

The flavor inhalers etc. 1 and the user terminals 2 are associated to each other and become able to communicate data with each other by establishing short-distance wireless communication such as Bluetooth [registered trademark] or BLE (Bluetooth low energy) communication. The communication of data between the flavor inhalers etc. 1 and the user terminals 2 is not limited to BLE communication, and may be achieved by any communication technology, such as Wi-Fi [registered trademark], LPWAN (low power wide-area network), or NFC (near-field communication). The communication of data between the flavor inhalers etc. 1 and the user terminals 2 is not necessarily limited to wireless communication, and may be wired communication achieved by, for example, USB (universal serial bus), mini-USB, micro-USB, or Lightning, instead.

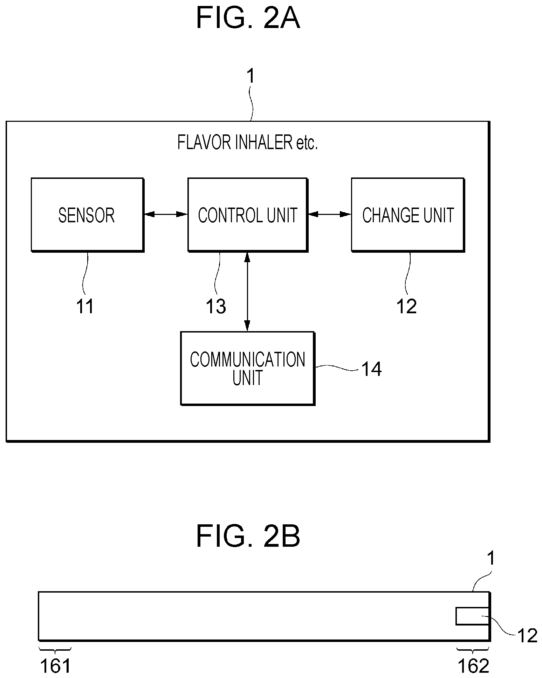

Fig. 2A is a block diagram of a schematic configuration of the flavor inhaler according to the embodiment of the present invention. It is to be noted that Fig. 2A schematically and conceptually illustrates the components included in the flavor inhaler 1 and does not illustrate strict positions, shapes, dimensions, positional relationships, or the like of the components and the flavor inhaler 1. It is also to be noted that the flavor inhaler 1 can include a component that is not illustrated in Fig. 2A, such as a tobacco capsule or a liquid cartridge.

A sensor 11 is, for example, a sensor for detecting an inhalation by the user. The sensor 11 may be a sensor of any type for detecting an inhalation by the user, such as a flow rate sensor, a flow velocity sensor, or a pressure sensor. The sensor 11 may be a button pressed by the user to inhale, instead. For example, the sensor 11 may be an inhalation sensor, instead, and detect an inhalation by the user using the flavor inhaler 1. The sensor 11 may be an airflow sensor, instead, and detect an airflow caused by an inhalation by the user. The sensor 11 may be a GPS sensor for measuring a position of the flavor inhaler 1, a gyro sensor for detecting an angle, an attitude, or the like of the flavor inhaler 1, or the like, instead.

A change unit 12 is a block where a certain change that can be observed from the outside occurs. The change unit 12 may be an LED (light-emitting diode) that emits light of a certain color, such as a blue LED, and the certain change may be emission of light of a certain color, such as blue. The certain color is not limited to blue and may be any color. The certain change may be a change in the color of light emitted or the intensity of light emitted according to the strength of inhalation detected by the sensor 11. The change unit 12 is not limited to an LED and may be a light source of a different configuration that emits light of a certain color.

Fig. 2B is a diagram illustrating an example of a schematic appearance of the flavor inhaler according to the embodiment of the present invention. The configuration of the change unit 12 will be described with reference to Fig. 2B. As illustrated in Fig. 2B, the flavor inhaler 1 may have, but is not limited to, a shape of a stick including two ends 161 and 162. The user puts the end 161 in his/her mouth for inhalation. The user may put in his/her mouth a mouthpiece for cigarettes that can be attached to the end 161, instead, in order to inhale through the end 161. When the flavor inhaler 1 has a shape illustrated in Fig. 2B, the change unit 12 is preferably provided at the other 162 of the two ends. The change unit 12 is at least a part of an outer surface of the flavor inhaler 1 and may have any shape such as a substantially rectangular shape illustrated in Fig. 2B or a ring shape (not illustrated) around the circumference of the flavor inhaler 1.

Fig. 2A will be referred to again. A control unit 13 is a block that causes a certain change in the change unit 12 on the basis of, at least, a signal from the sensor 11. For example, the control unit 13 may cause emission of light of a certain color in the change unit 12 if the strength of a signal from the sensor 11 or the strength of inhalation determined on the basis of the signal is higher than or equal to a certain threshold. In addition, for example, the control unit 13 may change the color or intensity of light emitted from the change unit 12 in accordance with the strength of a signal from the sensor 11 or the strength of inhalation determined on the basis of the signal. The control unit 13 may increase the intensity of light emitted when an inhalation is strong, for example, and decrease the intensity of light emitted when an inhalation is weak. Alternatively, for example, the control unit 13 may divide the strength of inhalation into plural stages, set a certain color for each of the stages, and cause emission of light of a certain color corresponding to the strength of inhalation. The control unit 13 may be an electronic circuit module configured as a microprocessor or a microcomputer.

A communication unit 14 communicates with the user terminal or another computer. The communication unit 14 may be achieved using at least a network interface or the like as a hardware resource. The control unit 13 is capable of sending various pieces of information detected by the sensor 11 to the user terminal or another computer via the communication unit 14. The information from various locations sent from the control unit 13 to the user terminal or another computer via the communication unit 14 is, for example, smoking information. The smoking information will be described later. The communication unit 14 is capable of receiving various pieces of information sent from the user terminal or another computer.

The flavor inhaler 1 according to the embodiment of the present invention includes a conventional cigarette. A conventional cigarette does not include the sensor 11, the control unit 13, and the communication unit 14, but a burning part thereof corresponds to the change unit 12. This is because a burning part of a conventional cigarette causes certain changes in color and temperature on the basis of an inhalation by the user.

When the flavor inhaler 1 is a conventional cigarette (e.g., a cigarette), a mouthpiece attached to an end of the cigarette (e.g., a mouthpiece for cigarettes) may include some or all of the functions of the sensor 11, the control unit 13, and the communication unit 14 illustrated in Fig. 2A. With this configuration, the mouthpiece can send various pieces of information detected by the sensor, such as smoking information, to the user terminal or another computer.

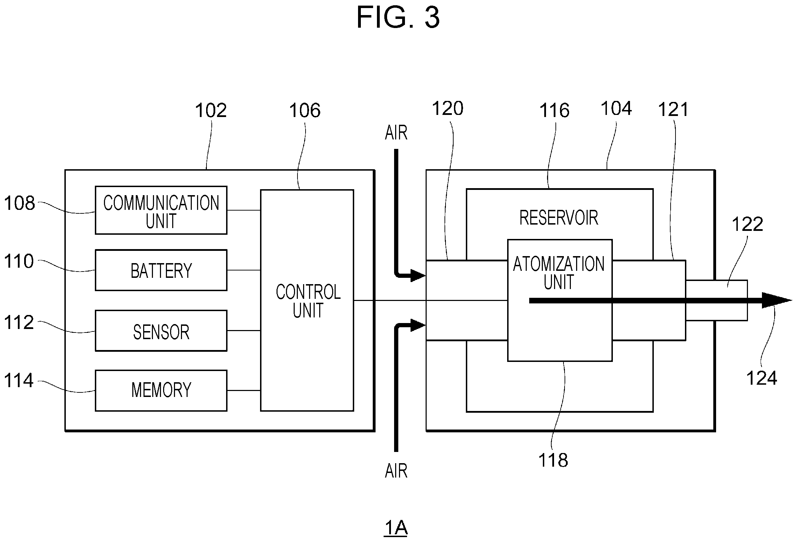

Fig. 3 is a block diagram illustrating a schematic configuration of the flavor inhaler according to the embodiment of the present invention. As illustrated in Fig. 3, a flavor inhaler 1A includes a first member 102 and a second member 104. As illustrated in Fig. 3, for example, the first member 102 may include a control unit 106, a communication unit 108, a battery 110, a sensor 112, and a memory 114. The control unit 13 illustrated in Fig. 2A corresponds to the control unit 106 illustrated in Fig. 3, the sensor 11 illustrated in Fig. 2A corresponds to the sensor 112 illustrated in Fig. 3, and the communication unit 14 illustrated in Fig. 2A corresponds to the communication unit 108 illustrated in Fig. 3.

For example, the second member 104 may include a reservoir 116, an atomization unit 118, an air intake path 120, an aerosol path 121, and a mouthpiece unit 122. Some of the components included in the first member 102 may be included in the second member 104, instead. Some of the components included in the second member 104 may be included in the first member 102, instead. The second member 104 may be removably attached to the first member 102. Alternatively, all the components included in the first member 102 and the second member 104 may be included in the same case instead of the first member 102 and the second member 104.

The reservoir 116 holds an aerosol source. The reservoir 116 is composed of a fibrous or porous material, for example, and holds an aerosol source, which is a liquid, in gaps between fibers or pores in the porous material. Cotton, glass fiber, or a tobacco material, for example, may be used for the fibrous or porous material. The reservoir 116 may be configured as a tank that stores a liquid. The aerosol source is, for example, a liquid such as a polyhydric alcohol, which may be glycerin or propylene glycol, or water. When the flavor inhaler 1A is a medical inhaler such as a nebulizer, the aerosol source may include a medicine to be inhaled by a patient. In another example, the aerosol source may include a tobacco material or an extract derived from a tobacco material that releases a smoke flavor ingredient upon heating. The reservoir 116 may be configured such that a consumed aerosol source can be replenished. Alternatively, the reservoir 116 may be configured such that the reservoir 116 can be replaced after the aerosol source is consumed. The aerosol source is not limited to a liquid and may be a solid, instead. The reservoir 116 at a time when the aerosol source is a solid may be, for example, a hollow container that does not use a fibrous or porous material.

The atomization unit 118 is configured to generate an aerosol by atomizing the aerosol source. When the sensor 112 detects an inhalation, the atomization unit 118 generates an aerosol. A wick (not illustrated), for example, may be provided in such a way as to connect the reservoir 116 and the atomization unit 118 to each other. In this case, a part of the wick is inserted into the reservoir 116 and comes into contact with the aerosol source. Another part of the wick extends to the atomization unit 118. The aerosol source flows from the reservoir 116 to the atomization unit 118 due to a capillary effect produced by the wick. For example, the atomization unit 118 includes a heater electrically connected to the battery 110. The heater is disposed in such a way as to come into contact with or in close proximity to the wick. When an inhalation is detected, the control unit 106 controls the heater of the atomization unit 118 and atomizes the aerosol source that has flown through the wick by heating the aerosol source. Another example of the atomization unit 118 may be an ultrasonic atomizer that atomizes the aerosol source through ultrasonic vibration. The air intake path 120 is connected to the atomization unit 118 and leads to the outside of the flavor inhaler 1A. The aerosol generated by the atomization unit 118 mixes with air taken through the air intake path 120. A mixed fluid of the aerosol and the air flows into the aerosol path 121 as indicated by an arrow 124. The aerosol path 121 has a tubular structure for transporting the mixed fluid of the aerosol generated by the atomization unit 118 and the air to the mouthpiece unit 122.

The mouthpiece unit 122 is located at an end of the aerosol path 121 and configured to open the aerosol path 121 to the outside of the flavor inhaler 1A. The user puts the mouthpiece unit 122 in his/her mouth and inhales to take air including the aerosol into the oral cavity.

The communication unit 108 communicates with the user terminal or another computer. The communication unit 108 may be achieved by at least a network interface or the like as a hardware resource.

The battery 110 supplies power to some components of the flavor inhaler 1A, such as the communication unit 108, the sensor 112, the memory 114, and the atomization unit 118. The battery 110 may be charged by connecting the flavor inhaler 1A to an external power supply through a certain port (not illustrated). Only the battery 110 may be removed from the first member 102 or the flavor inhaler 1A and replaced by a new battery 110. The battery 110 may be replaced by a new battery 110 by replacing the entirety of the first member 102 with a new first member 102.

The sensor 112 may include a pressure sensor that detects variation in pressure inside the air intake path 120 and/or the aerosol path 121 or a flow rate sensor that detects a flow rate. The sensor 112 may also include a weight sensor that detects the weight of a component such as the reservoir 116. The sensor 112 may be configured to count the number of puffs by the user using the flavor inhaler 1A. The sensor 112 may be configured to accumulate periods of time for which the atomization unit 118 has been energized. The sensor 112 may also be configured to detect a liquid level inside the reservoir 116. The sensor 112 may also be configured to detect an SOC (state of charge), an integrated value of current, voltage, or the like of the battery 110. The integrated value of current may be obtained by current integration, an SOC-OCV (open circuit voltage) method, or the like. The sensor 112 may be an operation button that can be used by the user.

The control unit 106 may be an electronic circuit module configured as a microprocessor or a microcomputer, instead. The control unit 106 may be configured to control the operation of the flavor inhaler 1A in accordance with computer-executable instructions stored in the memory 114. The memory 114 is a storage medium such as a ROM, a RAM, or a flash memory. The memory 114 may also store setting data and the like necessary to control the flavor inhaler 1A, as well as the computer-executable instructions. For example, the memory 114 may store various pieces of data such as methods for controlling the communication unit 108 (modes of light emission, voice output, vibration, etc.), values detected by the sensor 112, and a heating history of the atomization unit 118. The control unit 106 reads data from the memory 114 as necessary, uses the data to control the flavor inhaler 1A, and stores the memory 114 as necessary.

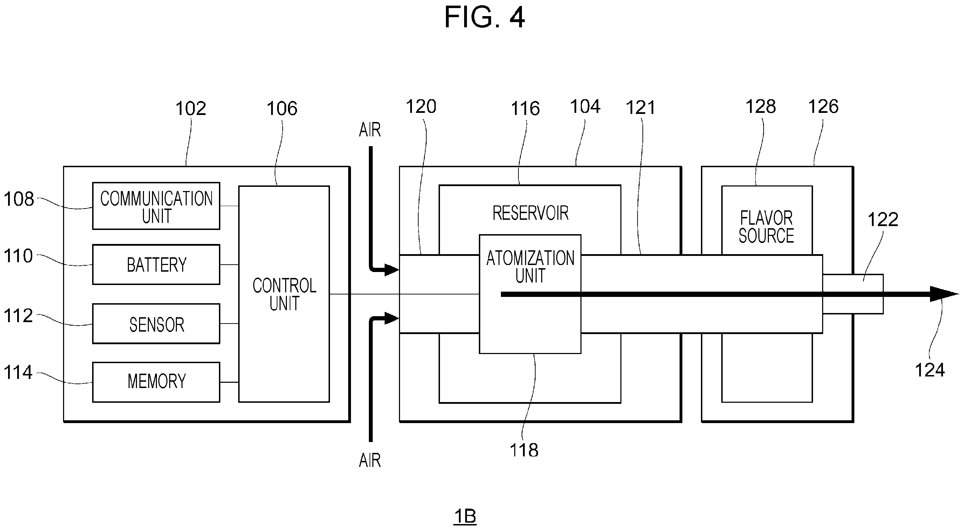

Fig. 4 is a block diagram illustrating another schematic configuration of the flavor inhaler according to the embodiment of the present invention. As illustrated in Fig. 4, a flavor inhaler 1B includes a third member 126 in addition to the components included in the flavor inhaler 1A illustrated in Fig. 3. The third member 126 may include a flavor source 128. When the flavor inhaler 1B is an electronic cigarette, for example, the flavor source 128 may include a smoke flavor ingredient included in tobacco. As illustrated in Fig. 4, the aerosol path 121 extends across the second member 104 and the third member 126. The mouthpiece unit 122 is included in the third member 126.

The flavor source 128 is a component for giving a flavor to an aerosol. The flavor source 128 is disposed in the aerosol path 121. A mixed fluid of an aerosol generated by the atomization unit 118 and air (note that the mixed fluid might be simply referred to an aerosol hereinafter) flows to the mouthpiece unit 122 through the aerosol path 121. The flavor source 128 is thus provided downstream of the atomization unit 118 in terms of the flow of the aerosol. In other words, the flavor source 128 is closer to the mouthpiece unit 122 in the aerosol path 121 than the atomization unit 118 is. The aerosol generated by the atomization unit 118 therefore reaches the mouthpiece unit 122 after passing through the flavor source 128. When the aerosol passes through the flavor source 128, the smoke flavor ingredient included in the flavor source 128 is given to the aerosol. When the flavor inhaler 1B is an electronic cigarette, for example, the flavor source 128 may be fine-cut tobacco or a processed product derived from tobacco, such as a tobacco material molded into granules, sheets or powder. The flavor source 128 may be derived from a non-tobacco plant (e.g., mint, an herb, etc.), instead. For example, the flavor source 128 includes a tobacco ingredient. The flavor source 128 may contain a flavor ingredient such as menthol. As well as the flavor source 128, the reservoir 116 may also include a substance including a smoke flavor ingredient. For example, the flavor inhaler 1B may be configured to hold a flavor substance derived from tobacco in the flavor source 128 and include a flavor substance derived from non-tobacco plant in the reservoir 116.

The user can take air including the aerosol to which the flavor has been given into the oral cavity by inhaling through the mouthpiece unit 122.

The control unit 106 is configured to control the flavor inhalers 1A and 1B (hereinafter might be generically referred to as "flavor inhalers 1") according to the embodiment of the present disclosure.

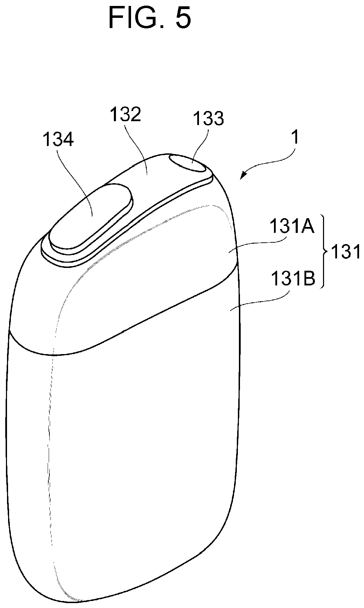

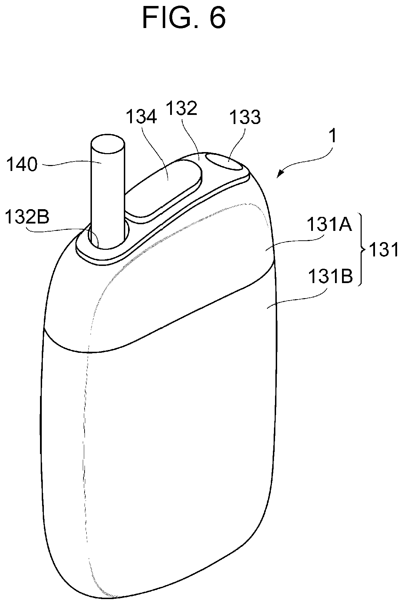

Fig. 5 is a diagram illustrating another example of the schematic appearance of the flavor inhaler according to the embodiment of the present invention. Fig. 6 illustrates another example of the schematic appearance of the flavor inhaler at a time when the flavor inhaler holds an aerosol-source material according to the embodiment of the present invention. In the present embodiment, for example, the flavor inhaler 1 is configured to generate an aerosol including a flavor by heating the aerosol-source material, such as a smoking article, including a flavor-source material such as a filler including an aerosol source and a flavor source. The smoking article 140 may be used as an aerosol-source material.

As those skilled in the art would understand, the smoking article 140 is just an example of the aerosol-source material. The aerosol source included in the aerosol-source material may be a solid or a liquid. The aerosol source may be, for example, a liquid such as a polyhydric alcohol, which may be glycerin or propylene glycol, or water. The aerosol source may include a tobacco material or an extract derived from a tobacco material that releases a smoke flavor ingredient upon heating. When the flavor inhaler 1 is a medical inhaler such as a nebulizer, the aerosol source may include a medicine to be inhaled by a patient. Depending on application, the aerosol-source material need not include a flavor source.

As illustrated in Figs. 5 and 6, the flavor inhaler 1 includes a top housing 131A, a bottom housing 131B, a cover 132, a switch 133, and a lid 134. The top housing 131A and the bottom housing 131B are connected to each other to form an outermost housing 131 of the flavor inhaler 1. The housing 131 may have a size that fits in a user's hand. In this case, when using the flavor inhaler 1, the user can inhale an aerosol while holding the flavor inhaler 1 by hand.

The top housing 131A has an opening (not illustrated), and the cover 132 is coupled with the top housing 131A in such a way as to cover the opening. As illustrated in Fig. 6, the cover 132 has an opening 132B into which the smoking article 140 can be inserted. The lid 134 is configured to open and close the opening 132B of the cover 132. More specifically, the lid 134 is attached to the cover 132 and configured to be able to move on a surface of the cover 132 between a first position, at which the opening 132B is closed, and a second position, at which the opening 132B is open.

The switch 133 is used to turn on and off the flavor inhaler 1. By using the switch 133 with the smoking article 140 inserted into the opening 132B as illustrated in Fig. 6, for example, the user can supply power to a heating unit (not illustrated) from a battery (not illustrated) and heat the smoking article 140 without burning the smoking article 140. When the smoking article 140 is heated, an aerosol is generated from the aerosol source included in the smoking article 140 and a flavor from the flavor source mixes with the aerosol. The user can inhale the aerosol including the flavor by inhaling through a part (a part illustrated in Fig. 6) of the smoking article 140 protruding from the flavor inhaler 1. A direction in which the aerosol-source material such as the smoking article 140 is inserted into the opening 132B will be referred to as a longitudinal direction of the flavor inhaler 1.

The configuration of the flavor inhaler 1 illustrated in Figs. 5 and 6 is just an example of the configuration of the flavor inhaler according to the present disclosure. The flavor inhaler according to the present disclosure can be configured in various modes in which an aerosol can be generated by heating the aerosol-source material including the aerosol source and the user can inhale the generated aerosol source.

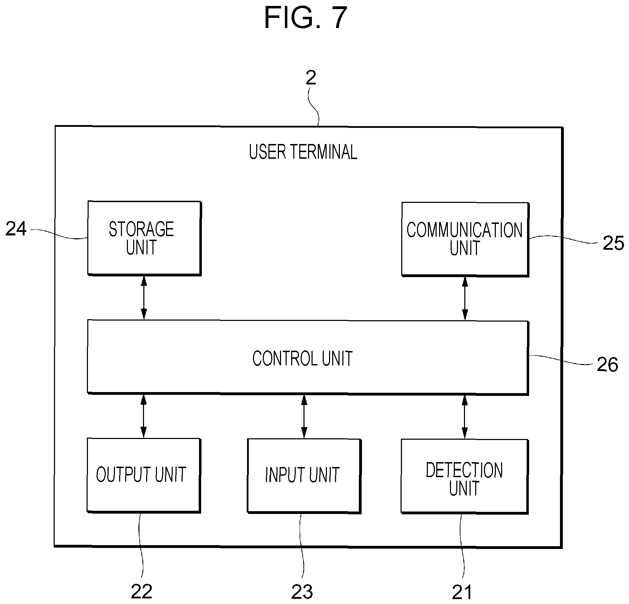

Fig. 7 is a block diagram illustrating a schematic configuration of the user terminal according to the embodiment of the present invention. It is to be noted that Fig. 7 schematically and conceptually illustrates components included in the user terminal 2 and does not illustrate strict positions, shapes, dimensions, positional relationships, or the like of the components and the user terminal 2. It is also to be noted that the user terminal 2 can include a component that is not illustrated in Fig. 7. An example of the user terminal 2 is a single computer such as a smartphone, a tablet, or a personal computer, but is not limited to this. For example, a detection unit 21, which will be described hereinafter, may be achieved by a digital camera connected to a computer from the outside.

The detection unit 21 detects a certain change that occurs in at least a part of the flavor inhaler 1, that is, the change unit 12, for example, and that can be observed from the outside. The detection unit 21 may be achieved using at least a digital camera, a temperature sensor, or the like as a hardware resource.

An output unit 22 performs a process for outputting a message on the basis of output information sent from the control server 5 illustrated in Fig. 1. The output unit 22 displays information indicating that the certain change has been detected. The output unit 22 may be achieved using at least a display (e.g., includes a touch panel display) as a hardware resource.

An input unit 23 receives inputs from the user. The input unit 23 may be achieved using at least a keyboard and a mouse, a touch panel display, or the like as a hardware resource.

A storage unit 24 stores programs, data, and the like. The storage unit 24 may be achieved using at least an HDD (hard disk drive), an SSD (solid-state drive), a memory, or the like as a hardware resource.

A communication unit 25 communicates with other computers. The communication unit 25 may be achieved using at least a network interface or the like as a hardware resource.

A control unit 26 performs various types of control. The control unit 26 may be achieved using at least a processor or the like as a hardware resource. The control unit 26 may be configured to make a determination as to inhalation methods employed by the user. The output unit 22 can also display a result of the determination. The control unit 26 may be configured to allow the user to select one of the inhalation methods through the input unit 23. The output unit 22 can also display information based on a selected inhalation method. Furthermore, the control unit 26 may be configured to communicate data through the communication unit 25. The output unit 22 can also output information based on received data.

The various functions of the user terminal 2 may be achieved using an application that operates on the user terminal. The user terminal 2 may download the application and achieve the various functions using the downloaded application, instead. The user terminal 2 may achieve the various functions thereof by downloading a program for achieving the various functions and executing the downloaded program, instead.

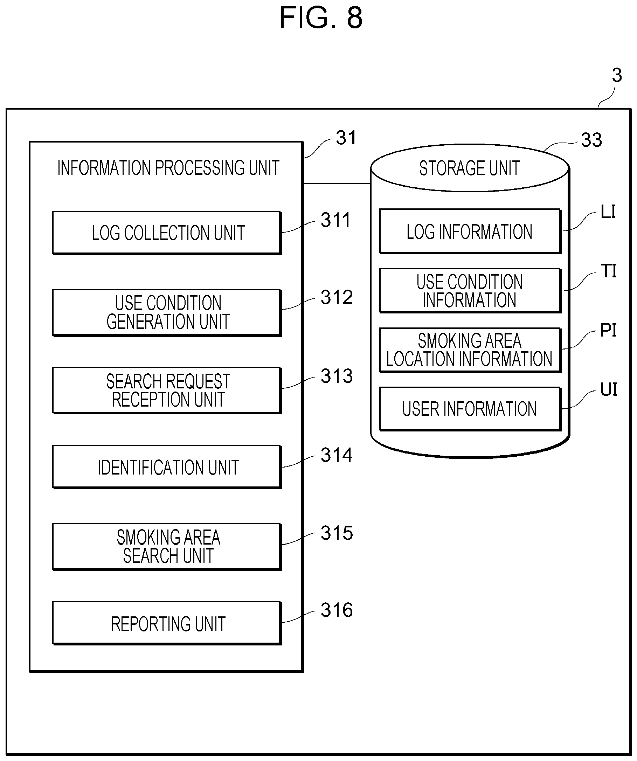

Fig. 8 is a schematic configuration diagram illustrating an example of the functional configuration of the information processing server according to the embodiment of the present invention. As illustrated in Fig. 8, the information processing server 3 functionally includes an information processing unit 31 for performing a smoking area reporting process for reporting locations of smoking areas and a storage unit 33 that stores information for performing the smoking area reporting process, execution results of the smoking area reporting process, and the like. The information processing unit 31 can be achieved, for example, by executing a program stored in the storage unit 33 using a CPU or the like. Alternatively, the information processing unit 31 may be achieved by downloading a program to be used for processing performed by the information processing unit 31 and executing the downloaded program.

The information processing unit 31 functionally includes a log collection unit 311 (collection unit) that collects, as log information (log), at least location information regarding the one or plurality of (at least one) user terminals 2 illustrated in Fig. 1, information indicating environmental conditions at locations of the user terminals 2, product IDs (identification information) of the flavor inhalers, or function IDs (information regarding functions) of the flavor inhalers.

"Environmental conditions" include conditions relating to atmospheric conditions such as weather, climate, and temperature, and may include, for example, a condition such as sunny, cloudy, rainy, or a heavy snowfall or a condition such as dry air, strong wind, or a storm. The environmental conditions include ones relating to a season, that is, for example, conditions relating to midwinter (very cold) or midsummer (very hot). The environmental conditions may be identified on the basis of information acquired by certain sensors provided for the user terminals 2 (e.g., temperatures acquired by temperature sensors, etc.). For example, environmental conditions (atmospheric conditions such as weather, climate, or temperature) at a current location of a user (or a user terminal) may be identified and collected on the basis of location information regarding the user (or the user terminal) sent from the user terminal and environmental information (e.g., a weather report, etc.) provided by a public institution or another organization.

The log collection unit 311 may, for example, regularly collect a log (e.g., at time intervals of several seconds, tens of seconds, or several minutes). Alternatively, the log collection unit 311 may repeatedly collect a log at any timing. The log collection unit 311 stores collected logs in the storage unit 33 as log information LI.

"Functions of a flavor inhaler" may include information indicating that the flavor inhaler is a conventional cigarette, which is a product that burns a tobacco material. The functions of the flavor inhaler may also include information indicating that the flavor inhaler is T-Vapor or E-Vapor. The functions of the flavor inhaler may further include information indicating, among products of flavor inhalers including tobacco materials, a heating product that heats tobacco or a non-heating product that does not heat tobacco. Furthermore, the functions of the flavor inhaler may further include information indicating, among heating products that heat tobacco, a product whose heating source uses electricity or a product whose heating source does not use electricity. The functions of the flavor inhaler may further include information indicating that the flavor inhaler is a product that atomizes a liquid by generating SAWs using a piezoelectric substrate including a pair of comb electrodes. The functions of the flavor inhaler may further include information indicating that the flavor inhaler is a product that heats tobacco using IH (induction heating). The functions of the flavor inhaler may be any kind of information insofar the functions of the flavor inhaler are information regarding an attribute or a characteristic of the flavor inhaler.

The storage unit 33 stores log information LI collected by the log collection unit 311, use condition information TI indicating one or a plurality of (at least one) use conditions for smoking areas, smoking area location information PI (location information) regarding one or a plurality of (at least one) smoking areas, and user information UI. The storage unit 33 stores at least the smoking area location information PI and the use condition information TI while associating the smoking area location information PI and the use condition information TI to each other. The user information UI includes identification information regarding the user terminals 2 used by the users, identification information regarding the flavor inhalers 1 associated to the user terminals 2, and the like, as well as identification information such as names of the users. The storage unit 33 may store the log information LI, the use condition information TI, and the smoking area location information PI for each of the users, instead, while associating the log information LI, the use condition information TI, and the smoking area location information PI to each other.

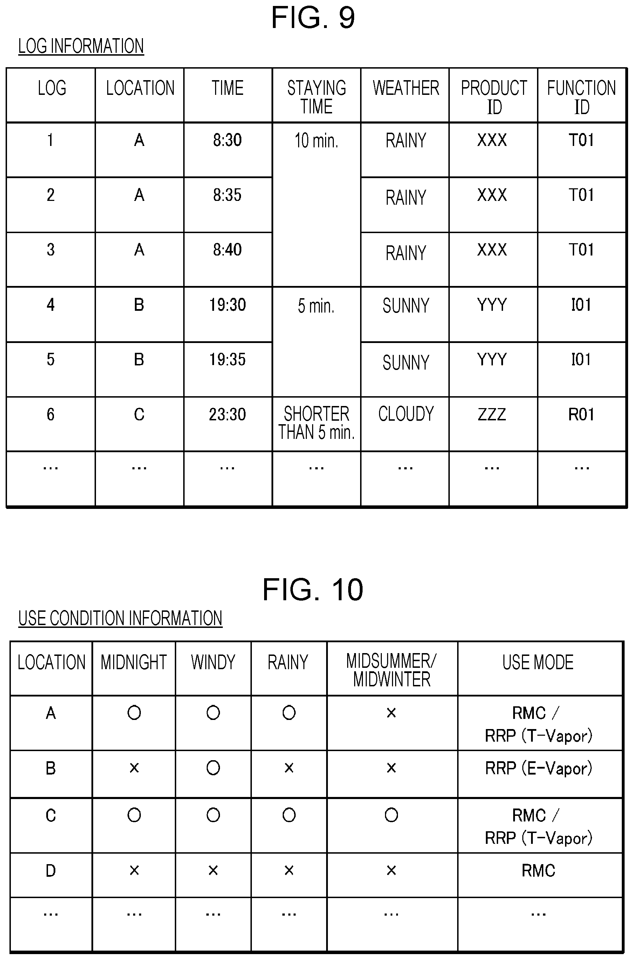

Fig. 9 is a diagram illustrating an example of the log information according to the embodiment of the present invention. As illustrated in Fig. 9, the storage unit 33 illustrated in Fig. 8 stores, as the log information, places (locations) where the one or plurality of user terminals 2 have stayed, log collection times, staying time estimated from the collection times, weather or the like at the locations of the one or plurality of user terminals 2, the product IDs of the flavor inhalers, and the function IDs of the flavor inhalers. Information indicating the places where the user terminals 2 have stayed may be information indicating latitude and longitude or addresses of certain places (e.g., coffee shops etc.). The log information is repeatedly collected from the one or plurality of user terminals 2. The number of logs is enormous and is not particularly limited. The number of logs, however, may be, say, several thousands to tens of thousands. The log collection unit 311 may store, for example, only logs at a time when the user terminals 2 have stayed at certain locations for a certain period of time or longer (e.g., 5 minutes or longer) in the storage unit 33 as confirmed logs.

Fig. 8 will be referred to again. The information processing unit 31 functionally includes a use condition generation unit 312 that generates one or a plurality of use conditions for smoking areas on the basis of the log information LI.

Fig. 10 is a diagram illustrating an example of the use condition information according to the embodiment of the present invention. As illustrated in Fig. 10, the use condition generation unit 312 generates use conditions associated to, for each smoking area ("place"), for example, whether the smoking area is available at midnight, whether the smoking area is available in strong wind (whether the smoking area is indoors or outdoors), whether the smoking area is available even in the rain, whether the smoking area is available in midsummer or midwinter (whether an air conditioning apparatus is installed in the smoking area), and a use mode of a flavor inhaler in the smoking area. In the example illustrated in Fig. 10, "O" indicates available, and "X" indicates unavailable. The use conditions are not limited to the above items (whether the smoking area is available at midnight etc.), and may include another item, such as whether the smoking area has a large capacity (the size of the smoking area is large).

If there are, as log information, a certain number or more of logs (e.g., 10 logs) indicating that one or a plurality of (at least one) user terminals 2 have stayed at place A at midnight, for example, the use condition generation unit 312 sets "O" for an item "midnight" of place A as illustrated in Fig. 10. Similarly, if there are, as log information, a certain number or more of logs (e.g., 10 logs) indicating that one or a plurality of user terminals 2 have stayed at place A in the rain, the use condition generation unit 312 sets "O" for an item "rainy" of place A. This indicates that place A is an outdoor smoking area provided with a roof or an indoor smoking area.

With respect to a use mode of a flavor inhaler in a smoking area, a product ID of the flavor inhaler 1 in the log information illustrated in Fig. 9 may be associated to a function (use mode) of the flavor inhaler 1 in advance, and the use mode may be identified on the basis of the association. Alternatively, a use mode of a flavor inhaler in a smoking area may be identified on the basis of, in the log information, a function ID corresponding to a function of the flavor inhaler 1.

The use condition generation unit 312 refers to the log information illustrated in Fig. 9, for example, and if one or a plurality of (at least one) users (or user terminals 2) who use the flavor inhalers 1 illustrated in Fig. 1 have stayed in a certain area for a certain period of time (e.g., 5 minutes) or longer, estimates the certain area to be a smoking area.

With this configuration, location information, which is collected as log information, indicating places where one or a plurality of (at least one) user terminals 2 have stayed might include location information indicating areas other than smoking areas in practice. If a user has stayed in a certain area for a certain period of time or longer, however, it is determined that the user has smoked, and the area is estimated to be a smoking area. Even when there are a plurality of candidates for a smoking area, therefore, the smoking area can be accurately estimated.

If the number of times that one or a plurality of users (or user terminals 2) who use the flavor inhalers 1 have stayed in a certain area for a certain period of time (e.g., 5 minutes) or longer is larger than or equal to a certain value (e.g., 10), the use condition generation unit 312 estimates the certain area to be a smoking area.

With this configuration, even when there are a plurality of candidates for a smoking area, the smoking area can be estimated more accurately by taking into consideration not only a period of time for which one or a plurality of users have stayed in a certain area but also the number of times that the one or plurality of users have stayed in the certain area.

The use condition generation unit 312 may use only logs at a time when it has been determined that one or a plurality of users have stayed at a certain location for a certain period of time or longer (e.g., 5 minutes or longer), for example, for generation of use conditions. Because staying time of log 6 in the log information illustrated in Fig. 9 is shorter than 5 minutes, for example, the use condition generation unit 312 does not use log 6 for generation of use conditions.

With this configuration, noise of logs, that is, use, for generation of use conditions, of information including location information regarding user terminals of users who have stayed near a smoking area for a short period of time even though the users do not smoke, for example, can be prevented.

Fig. 8 will be referred to again. The information processing unit 31 functionally includes a search request reception unit 313 (reception unit) that receives a search request for smoking areas including location information regarding a user terminal, an identification unit 314 that, when a search request is received from a user terminal, identifies at least a time at which the search request has been received, environmental conditions at a current location of the user terminal, or a use mode of a flavor inhaler, a smoking area search unit 315 (search unit) that searches for smoking areas that are located within a certain range from the current location and that meet use conditions on the basis of location information regarding smoking areas and at least an identified time, identified environmental conditions, or an identified use mode, and a reporting unit 316 that reports location information regarding retrieved smoking areas to the user terminal. These components will be described in detail when describing a process for reporting locations of smoking areas.

### [Process for Reporting Locations of Smoking Areas]

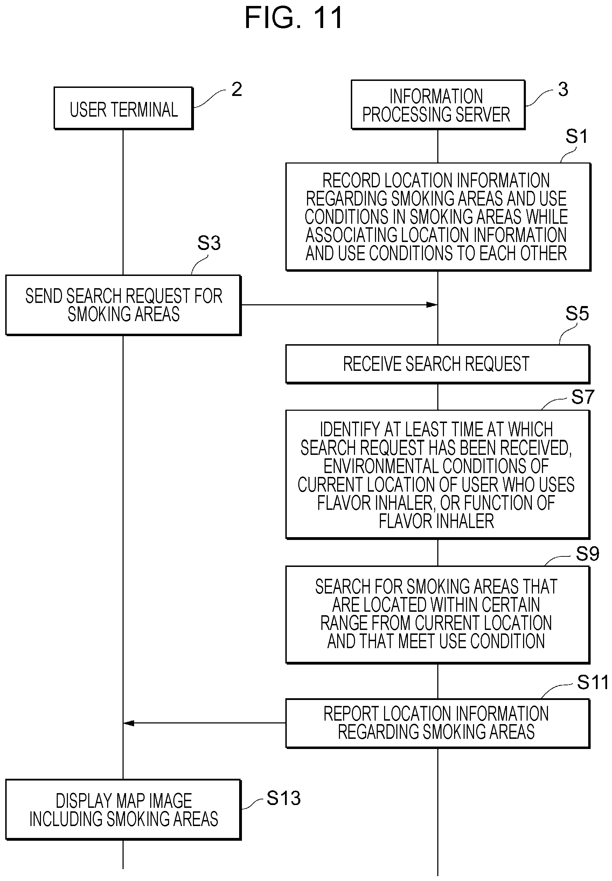

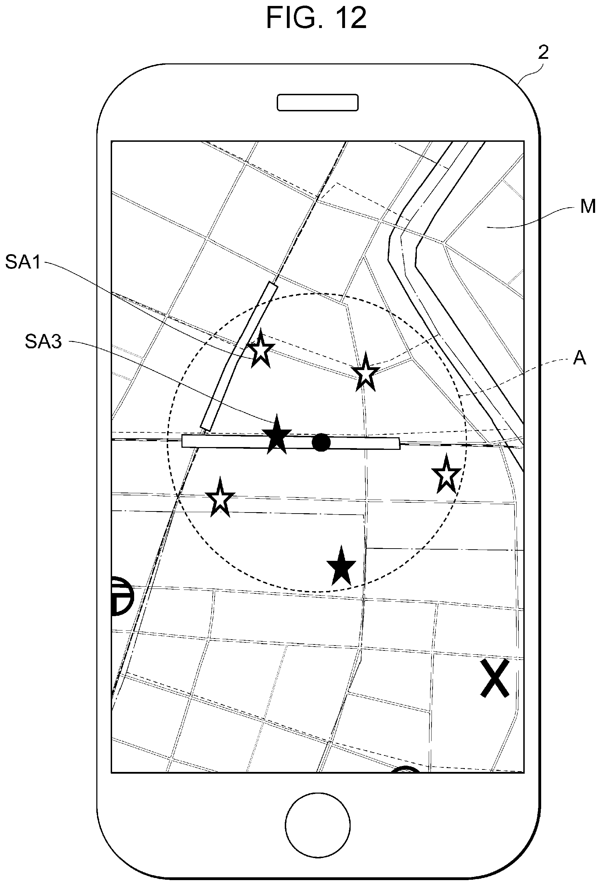

An example of the process for reporting locations of smoking areas according to the embodiment of the present invention will be described with reference to Figs. 11 and 12. Fig. 11 is a flowchart illustrating an example of the process for reporting locations of smoking areas according to the embodiment of the present invention.

### (Step S1)

The storage unit 33 of the information processing server 3 illustrated in Fig. 8 stores smoking area location information PI and use condition information TI while associating the smoking area location information PI and the use condition information TI to each other. The use condition information TI may be use conditions generated by the use condition generation unit 312 illustrated in Fig. 8. The use condition information TI may be input from user terminals 2 by users, for example, using the user terminals 2, instead.

### (Step S3)

A user terminal 2 sends, to the information processing server 3, a search request for smoking areas including location information regarding the user terminal 2. The user terminal 2 may send the location information regarding the user terminal 2 as information different from the search request or at a time different from a time at which the search request is sent, instead.

### (Step S5)

The search request reception unit 313 of the information processing server 3 illustrated in Fig. 8 receives, from the user terminal 2, the search request for smoking areas including the location information regarding the user terminal 2. The search request reception unit 313 may receive a search request from one of the flavor inhalers 1 illustrated in Fig. 1 associated to the user terminal 2, instead.

### (Step S7)

When the identification unit 314 of the information processing server 3 illustrated in Fig. 8 receives the search request from the user terminal 2, the identification unit 314 identifies at least a time at which the search request has been received, environmental conditions at a current location of the user terminal 2, or a use mode of the flavor inhaler 1.

For example, the identification unit 314 identifies the time at which the search request has been received on the basis of a fact that the search request reception unit 313 has received the search request. The identification unit 314 may identify the current location of the user terminal 2 on the basis of the location information regarding the user terminal 2 included in the search request and the environmental conditions at the current location of the user terminal 2 on the basis of environmental information (e.g., a weather report etc.) provided by a public institution or another organization. Alternatively, the identification unit 314 may identify the environmental conditions on the basis of information (e.g., a temperature acquired by a temperature sensor etc.) that has been acquired by a certain sensor provided for the user terminal 2 and that is included in, or sent separately from, the search request. Alternatively, the user terminal 2 may acquire the current location thereof using a GPS function thereof and send acquired current location information to the information processing server 3, and the identification unit 314 may identify the current location of the user terminal 2 on the basis of the acquired current location information. If certain location information and identification information regarding certain stores are stored in the storage unit 33 in advance, the identification unit 314 may identify a location of a store, that is, a location at which the user currently stays, by providing identification information regarding the store at which the user terminal 2 currently stays for the information processing server 3.

The identification unit 314 identifies the use mode of the flavor inhaler 1 on the basis of identification information regarding the user terminal 2 that is included in, or sent separately from, the search request from the user terminal 2. When a function (e.g., a use mode) of each flavor inhaler 1 is stored in the storage unit 33 in advance while being associated to a corresponding one of the user terminal 2, for example, the identification unit 314 identifies the use mode of the flavor inhaler 1 by referring to the information stored in the storage unit 33 on the basis of the identification information regarding the user terminal 2 from the user terminal 2.

### (Step S9)

The smoking area search unit 315 of the information processing server 3 illustrated in Fig. 8 searches, on the basis of the location information regarding smoking areas and at least the identified time at which the search request has been received, the identified environmental conditions at the current location of the user terminal 2, or the identified use mode of the flavor inhaler 1, for smoking areas that are located within a certain range (e.g., 1 km) from the current location and that meet the use conditions. The certain range is not particularly limited insofar as the certain range is not very wide from the current location of the user so that locations of smoking areas convenient for the user can be provided.

For example, the smoking area search unit 315 searches one or a plurality of (at least one) smoking areas located near the current location of the user terminal 2 for smoking areas that meet the use conditions illustrated in Fig. 10. More specifically, if the search request has been sent from the user terminal 2 (1) at midnight (2) in the rain, smoking areas A and C meet the two conditions, namely (1) at midnight (2) in the rain, in the use conditions in Fig. 10. The smoking area search unit 315, therefore, extracts smoking areas A and C in the search process.

The smoking area search unit 315 may determine a degree of satisfaction of the use conditions. If the user terminal 2 has sent the search request (1) on January 20 (2) at midnight (3) in the rain, for example, smoking area C meets the three conditions, namely (1) January 20 (2) at midnight (3) in the rain, and smoking area A, though not meeting the condition (1), meets the other two conditions, namely (2) at midnight (3) in the rain, in the user conditions illustrated in Fig. 10. The smoking area search unit 315, therefore, may determine that a degree of satisfaction of smoking area C, which meets the three conditions, is high and that a degree of satisfaction of smoking area A is lower than that of smoking area C. The smoking area search unit 315 may also determine that smoking areas B and D, which satisfy none of the three conditions, are smoking areas that do not meet the use conditions or smoking areas whose degrees of satisfaction cannot be determined.

### (Step S11)

The reporting unit 316 of the information processing server 3 illustrated in Fig. 8 reports, to the user terminal 2, location information regarding the one or plurality of (at least one) smoking areas retrieved by the smoking area search unit 315. For example, the reporting unit 316 may send information regarding the degrees of satisfaction determined by the smoking area search unit 315 along with the location information regarding the one or plurality of retrieved smoking areas, instead.

### (Step S13)

The user terminal 2 displays a map image including the smoking areas on the basis of, for example, display information including the location information regarding the smoking areas reported from the reporting unit 316 of the information processing server 3.

Fig. 12 is a diagram illustrating an example of a screen output on the user terminal according to the embodiment of the present invention. As illustrated in Fig. 12, a map image M is displayed on a screen of the user terminal 2. The map image M includes, among smoking areas located within a certain range A (e.g., 1 km) from a current location CP of the user (or the user terminal), for example, a plurality of smoking areas SA1 to SA6 that meet use conditions. The smoking areas SA1 to SA6 may be indicated by letters, another sign, a figure, a character, or the like instead of a star mark. The smoking areas SA3 and SA5 indicated by solid star marks, for example, are smoking areas whose degrees of satisfaction are higher, and the smoking areas SA1, SA2, SA4, and SA6 indicated by hollow star marks are smoking areas whose degrees of satisfaction are lower. For example, the smoking areas SA3 and SA5, whose degrees of satisfaction are higher, may indicate that the degrees of satisfaction thereof are higher by flashing star marks or in another mode, instead of solid star marks. The smoking areas SA1, SA2, SA4, and SA6, whose degrees of satisfaction are lower, on the other hand, may indicate that the degrees of satisfaction thereof are lower with opaque star marks or in another mode, instead of hollow star marks. An image displayed on the user terminal 2 may thus indicate smoking areas whose degrees of satisfaction of use conditions are higher and smoking areas whose degrees of satisfaction of the use conditions are lower in different display modes.

The user terminal 2 may present smoking areas to the user using text information, audio information, movie information, Morse code, or the like instead of, or in addition to, displaying the smoking areas on the map image M. Means and a method for presenting smoking areas on a user terminal are not limited to these examples, and any means or method may be used to present smoking areas insofar as the user can recognize locations of smoking areas.

With this configuration, smoking areas that more adequately meet the user's needs can be presented in a display mode more recognizable by the user.

The user terminal 2 may display display information including the location information regarding the smoking areas reported from the reporting unit 316 of the information processing server 3 using a dedicated or general-purpose application, instead. The user terminal 2 may download a dedicated or general-purpose application and display the display information including the location information regarding the smoking areas reported from the reporting unit 316 of the information processing server 3 using the downloaded application. Alternatively, the user terminal 2 may download a program for displaying the display information including the location information regarding the smoking areas reported from the reporting unit 316 of the information processing server 3 and display the display information by executing the downloaded program. Alternatively, the user terminal 2 may achieve the display of the display information including the location information regarding the smoking areas reported from the reporting unit 316 of the information processing server 3 using a function of a dedicated or general-purpose web browser.

The smoking area search unit 315 of the information processing server 3 may repeatedly search for smoking areas that meet the use conditions at certain time intervals. The certain time intervals may be any time intervals such as 1 minute, 5 minutes, or 10 minutes. In this case, the identification unit 314 may repeatedly request the user terminal 2 to send location information regarding the user terminal 2 and identify the current location of the user terminal 2 on the basis of the location information sent from the user terminal 2 in accordance with the request. Alternatively, the identification unit 314 may repeatedly identify environmental conditions at the current location of the user terminal 2 on the basis of environmental information (e.g., a weather report etc.). Alternatively, the identification unit 314 may repeatedly request the user terminal 2 to send information acquired by a certain sensor provided for the user terminal 2 and identify the environmental information on the basis of the information sent from the user terminal 2 in accordance with the request. The smoking area search unit 315 may repeatedly search for smoking areas that are located within the certain range (e.g., 1 km) from the current location and that meet use the conditions on the basis of the location information regarding smoking areas and at least the identified time at which the search request has been received, the identified environmental conditions at the current location of the user terminal 2, or the identified use mode of the flavor inhaler 1 using these pieces of information.

The reporting unit 316 of the information processing server 3 may report location information regarding one or a plurality of smoking areas repeatedly retrieved by the smoking area search unit 315 to the user terminal 2. The user terminal 2 may update smoking areas displayed on a map image including the smoking areas or degrees of satisfaction of the smoking areas on the basis of display information including the location information regarding the smoking areas repeatedly reported from the reporting unit 316 of the information processing server 3.

With this configuration, smoking areas that more adequately meet the user's needs can be presented in a display mode more recognizable by the user on the basis of newer environmental information or the like.

The smoking area search unit 315 of the information processing server 3 may search for one or a plurality of smoking areas using machine learning, a neural network, deep learning, or the like, instead. The neural network may be, for example, a hierarchical neural network, a deep neural network, or the like. The neural network is a network having a hierarchical structure. A neural network includes an input layer, an intermediate layer, and an output layer, and each of the layers includes a plurality of nodes. The neural network can solve classification problems by setting desired weights for nodes between the input layer and the intermediate layer and nodes between the intermediate layer and the output layer and adjusting connection states between the nodes. The neural network may be an interconnected neural network, instead. The neural network may be, for example, a simple perceptron, backprovacation, a support vector machine, a Hopfield model, a self-organizing map, or the like.

The smoking area search unit 315 creates a plurality of pieces of training data and learns a set of input information (e.g., various pieces of information included in a search request from the user terminal 2) and output information (retrieved smoking areas) on the basis of the log information LI, the use condition information TI, the smoking area location information PI, and the like stored in the storage unit 33 for each of the users. The smoking area search unit 315 can receive a search request from the user terminal 2 and search for, as output information, smoking areas that meet use conditions on the basis of the plurality of pieces of training data using machine learning, a neural network, or deep learning. The smoking area search unit 315 may search for smoking areas using machine learning without training data or the like, instead. For the creation of the plurality of pieces of training data, g information LI, use condition information TI, and smoking area location information PI regarding a plurality of users may be used. The training data may be updated at a certain time. The certain time may be, for example, any time such as a time when the user terminal 2 has sent a search request or a time when smoking areas are searched for a predetermined number of times.

With this configuration, since smoking areas are searched for on the basis of a result of a search for each user or a result of a search for a plurality of users using machine learning or the like, smoking areas that more adequately meet the user's needs can be searched for.

According to the embodiment of the present invention described above, smoking areas that are located within a certain range from a current location of a user terminal 2 and that meet use conditions are searched for on the basis of location information regarding smoking areas and at least an identified time at which a search request has been received, identified environmental conditions at the current location of the user terminal 2, or an identified use mode of the flavor inhaler 1, and location information regarding the retrieved smoking areas is reported to the user terminal 2. Smoking areas desired by the user, therefore, can be accurately searched for, and the user need not input certain conditions for finding smoking areas. Information regarding smoking areas desired by the user, therefore, can be accurately and effortlessly acquired.

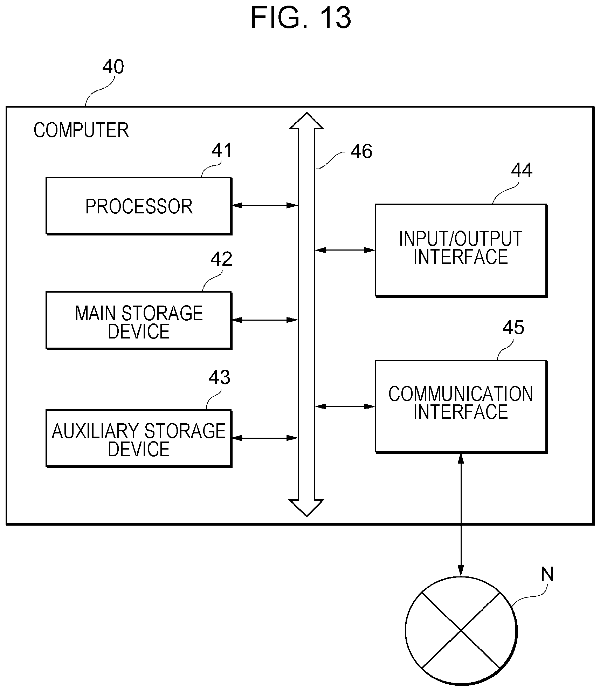

Fig. 13 is a diagram illustrating an example of the hardware configuration of a computer according to the embodiment of the present invention. An example of the hardware configuration of the computer that can be used as the user terminal 2 or the information processing server 3 illustrated in Fig. 1 or that can be used to achieve the user terminal 2 or the information processing server 3 will be described with reference to Fig. 13.

As illustrated in Fig. 13, a computer 40 mainly includes, as hardware resources, a processor 41, a main storage device 42, an auxiliary storage device 43, an input/output interface 44, and a communication interface 45, and these components are connected to one another through a bus line 46 including an address bus, a data bus, a control bus, and the like. An interface circuit (not illustrated) might exist between the bus line 46 and each of the hardware resources.

The processor 41 controls the entirety of the computer. The main storage device 42 provides a working area for the processor 41 and is a nonvolatile memory such as an SRAM (static random-access memory) or a DRAM (dynamic random-access memory). The auxiliary storage device 43 is a nonvolatile memory storing programs, data, and the like, which are software, such as an HDD, an SSD, or a flash memory. The programs, the data, and the like are loaded into the main storage device 42 from the auxiliary storage device 43 through the bus line 46 at any point in time.

The input/output interface 44 provides and/or receives information and is a digital camera, a keyboard, a mouse, a display, a touch panel display, a microphone, a speaker, a temperature sensor, and/or the like. The communication interface 45 is connected to a network N and communicates data through the network N. The communication interface 45 and the network N can be connected by wire or wirelessly. The communication interface 45 can acquire information regarding the network, namely, for example, information regarding an access point of Wi-Fi or information regarding a base station of a communication carrier.

It is obvious to those skilled in the art that, as a result of cooperation of the above-described hardware resources and the software, the computer 40 can function as desired means, perform desired steps, and achieve desired functions.

The above embodiments are provided in order to facilitate understanding of the present invention and not intended to limit interpretation of the present invention. The present invention can be modified or improved without deviating from the scope thereof and also includes equivalents thereof.

### Reference Signs List

- 1: flavor inhaler
- 1A, 1B: flavor inhaler
- 2: user terminal
- 3: information processing server
- 5: control server
- 11: sensor
- 12: change unit
- 13: control unit
- 14: communication unit
- 21: detection unit
- 22: output unit
- 23: input unit
- 24: storage unit
- 25: communication unit
- 26: control unit
- 31: information processing unit
- 33: storage unit
- 100: smoking area location reporting system
- 102: first member
- 104: second member
- 106: control unit
- 108: communication unit
- 110: battery
- 112: sensor
- 114: memory
- 116: reservoir
- 118: atomization unit
- 120: air intake path
- 121: aerosol path
- 122: mouthpiece unit
- 126: third member
- 128: flavor source
- 131: housing
- 131A: top housing
- 131B: bottom housing
- 132: cover
- 132B: opening
- 133: switch
- 134: lid
- 140: smoking article
- 161, 162: end
- 311: log collection unit
- 312: use condition generation unit
- 313: search request reception unit
- 314: identification unit
- 315: smoking area search unit
- 316: reporting unit

## Claims

1. An information processing device comprising:
a storage unit that stores location information regarding at least one smoking area and at least one use condition for the smoking area while associating the location information and the use condition to each other;
a reception unit that receives a search request for a smoking area including location information regarding a user terminal;
an identification unit that, in a case where the search request is received from the user terminal, identifies at least a time at which the search request has been received, an environmental condition at a current location of the user terminal, or a use mode of a flavor inhaler;
a search unit that searches for a smoking area that is located within a certain range from the current location and that meets the use condition on a basis of the location information regarding the smoking area and at least the identified time, the identified environmental condition, or the identified use mode; and
a reporting unit that reports location information regarding the retrieved smoking area to the user terminal.

2. The information processing device according to Claim 1,
wherein the use condition includes a period of time in which a user can stay in the smoking area, and
wherein, in the case where the search request is received, the search unit searches for a smoking area that meets the use condition on a basis of the time.

3. The information processing device according to Claim 1 or 2, further comprising:
a collection unit that collects, as a log, location information regarding at least one user terminal and at least information regarding an environmental condition at a location of the user terminal, identification information regarding the flavor inhaler, or information regarding a function of the flavor inhaler; and
a use condition generation unit that generates the use condition on a basis of the log.

4. The information processing device according to Claim 3,
wherein, if at least one user who uses the flavor inhaler has stayed in a certain area for a certain period of time or longer, the use condition generation unit estimates the certain area to be a smoking area.

5. The information processing device according to Claim 3,
wherein, if a number of times that at least one user who uses the flavor inhaler has stayed in a certain area for a certain period of time or longer is larger than or equal to a certain value, the use condition generation unit estimates the certain area to be a smoking area.

6. An information processing method executed by a computer, the information processing method comprising the steps of:
storing location information regarding at least one smoking area and at least one use condition for the smoking area while associating the location information and the use condition to each other;
receiving a search request for a smoking area including location information regarding a user terminal;
identifying, in a case where the search request is received from the user terminal, at least a time at which the search request has been received, an environmental condition at a current location of the user terminal, or a use mode of a flavor inhaler;
searching for a smoking area that is located within a certain range from the current location and that meets the use condition on a basis of the location information regarding the smoking area and at least the identified time, the identified environmental condition, or the identified use mode; and
reporting location information regarding the retrieved smoking area to the user terminal.

7. The information processing method according to Claim 6,
wherein the use condition includes a period of time in which a user can stay in the smoking area, and
wherein, in the case where the search request is received, a smoking area that meets the use condition is searched for on a basis of the time in the step of searching for the smoking area.

8. The information processing method according to Claim 6 or 7, further comprising the steps of:
collecting, as a log, location information regarding at least one user terminal and at least information regarding an environmental condition at a location of the user terminal, identification information regarding the flavor inhaler, or information regarding a function of the flavor inhaler; and
generating the use condition on a basis of the log.

9. The information processing method according to Claim 8,
wherein, if at least one user who uses the flavor inhaler has stayed in a certain area for a certain period of time or longer, the certain area is estimated to be a smoking area in the step of generating the use condition.

10. The information processing method according to Claim 8,
wherein, if a number of times that at least one user who uses the flavor inhaler has stayed in a certain area for a certain period of time or longer is larger than or equal to a certain value, the certain area is estimated to be a smoking area in the step of generating the use condition.

11. A program for causing a computer to achieve:
a storage unit that stores location information regarding at least one smoking area and at least one use condition for the smoking area while associating the location information and the use condition to each other;
a reception unit that receives a search request for a smoking area including location information regarding a user terminal;
an identification unit that, in a case where the search request is received from the user terminal, identifies at least a time at which the search request has been received, an environmental condition at a current location of the user terminal, or a use mode of a flavor inhaler;
a search unit that searches for a smoking area that is located within a certain range from the current location and that meets the use condition on a basis of the location information regarding the smoking area and at least the identified time, the identified environmental condition, or the identified use mode; and
a reporting unit that reports location information regarding the retrieved smoking area to the user terminal.
